# EUROPEAN PATENT SPECIFICATION

(11) **EP 2 025 136 B1**
(45) Date of publication and mention of the grant of the patent: **04.07.2012**
(21) Application number: 06830223.1
(22) Date of filing: 30.11.2006
(51) Int. Cl.: H04M 1/60, H04M 1/05, H04M 19/04

(54) **SOUND OUTPUT SELECTION IN RELATION TO AN ACCESSORY**
TONAUSGABEAUSWAHL IN BEZUG AUF EINE HILFSEINRICHTUNG
SÉLECTION DE SORTIE SONORE EN RELATION AVEC UN ACCESSOIRE

(30) Priority: 02.06.2006 US 803779 P; 03.11.2006 US 556446
(43) Date of publication of application: 18.02.2009
(73) Proprietor: SONY ERICSSON MOBILE COMMUNICATIONS AB, 221 88 Lund (SE)
(72) Inventor: ANDREASSON, Markus, SE-222 21 Lund (SE)
(74) Representative: Hagström, Lena
(86) International application number: PCT/EP2006/069119
(87) International publication number: WO 2007/140821

(56) References cited:
- EP-A- 1 154 621
- DE-A1- 10 018 306
- GB-A- 2 277 422
- US-A1- 2004 121 796
- US-A1- 2004 228 476
- US-A1- 2006 029 234

## Description

### TECHNICAL FIELD OF THE INVENTION

The present invention relates to the selection of where to output sound in relation to applications in portable electronic devices. The present invention more particularly relates to a method of determining where to output sound for an application of a portable electronic device in relation to an accessory, a portable electronic device to be connected to an accessory, a computer program product for determining where to output sound for an application of a portable electronic device in relation to an accessory, a method of enabling determining where to output sound for an application of a portable electronic device in relation to an accessory as well as to an accessory for connection to a portable electronic device.

### DESCRIPTION OF RELATED ART

In the field of portable electronic devices and then especially in the field of portable communication devices, such as cellular phones, it is well known to provide accessories such as portable hands-free devices. A portable hands free device may be connected to the electrical system connector of the phone, but may also be connected with the phone using wireless short range communication interfaces for instance interfaces using the Bluetooth^{™} technology. Such accessories normally comprise a microphone and one or two ear phones and provide a user of the phone the possibility to engage in phone conversations, listen to music and engage in other activities without holding the phone.

Today sound output in relation to an application, for instance sound output in reation to the notification of events in an application, such as the alerting of a call being made to a cellular phone, alerting of a received message or an alerting in relation to a calendar setting, is made using the earphones of the accessory as sound output units whenever the accessory is connected to the phone. However, there is a risk that the user of the accessory is not listening in the earphones even though the accessory is plugged in. For safety reasons all possible sound output units may be selected, for instance both the earphones of the accessory as well as the speakers of the phone. This is an unnecessary waste of power. It is furthermore known to make a selection of sound output unit based on if the accessory is connected. Alerting will then only be performed in the accessory if it is connected. However then alerting may be made using the wrong sound output unit if the user is not using the earphones, which unnecessarily wastes power. As cellular phones are battery powered, this may thus lead to the battery being drained faster. Furthermore, if no other sound output units than the earphones are selected there is also a risk that calls will be missed by the user. This problem of selecting wrong sound output unit and wasting power is not limited to alerting of events but may occur for any application using sound.

US 2006029234 discloses a system and method for automatically changing a state of a device coupled to a headphone device is provided. The system comprises a means for detecting if at least one earpiece of the headphone device is activated or deactivated. Based on an activation state or a change in an activation state of the at least one earpiece, a state change may occur in the device. The state change is determined by a preset of a control module.

DE 10018306 discloses a telephone includes an output circuit for a selective output of sound signals at an interface for an ear-piece. The output circuit comprises a detection circuit for detecting a use of the ear-piece, whereby the output circuit outputs the information signals, only then to the interface, if the earpiece is detected.

EP 1154621 discloses a mobile station for a mobile telecommunications system comprising a handset and a headset for connection to the handset. Embodiments are described including automatic sensors for detecting use of the headset or handset.

There is thus a need for providing a safer way of selecting sound output units for an application of a portable electronic device when an accessory is used.

### SUMMARY OF THE INVENTION

The present invention is therefore directed towards providing a more efficient way of selecting sound output unit for an application of a portable electronic device in relation to a connected accessory.

One object of the present invention is to provide a more efficient method of determining where to output sound for an application of a portable electronic device in relation to an accessory.

The object is achieved by a method, a portable electronic device, and a computer program product, respectively, according to the independent claims.

Aspects and embodiments below represent background art, examples or ways to carry out the invention, which are useful for understanding the invention.

According to a first aspect, this object is achieved by a method of determining where to output sound for an application of a portable electronic device in relation to an accessory that comprises at least one first sound output unit, the accessory being connected to the portable electronic device, the method comprising the steps of:
determining if the first sound output unit is attached to the body of a user or not; selecting at least one sound output unit to be used for the application based on the determination of if the first sound output unit is connected to the body of the user or not, and
using the selected sound output unit for outputting sound for the application.

A second aspect includes the features of the first aspect, wherein the step of selecting sound output unit comprises selecting a sound output unit of the accessory if the first sound output unit is attached to the body of the user.

A third aspect includes the features of the second aspect, wherein the only sound output units selected if the first sound output unit is attached to the body of the user are sound output units of the accessory.

A fourth aspect includes the features of the first aspect, further comprising the step of detecting the occurrence of an event in the application in relation to the portable electronic device, wherein the step of selecting sound output unit is also based on the detection of the occurence of the event and the step of using the selected sound output unit comprises alerting the event using the selected sound output unit.

A fifth aspect includes the features of the fourth aspect, further comprising the step of selecting a vibrator in the portable electronic device for alerting the event if the first sound output unit is attached to the body of the user.

A sixth aspect includes the features of the fourth aspect, wherein the step of determining the occurrence of an event comprises receiving an incoming call.

A seventh aspect includes the features of the sixth aspect, further comprising the step of automatically accepting the call after a predetermined number of alerting intervals if the first sound output unit is attached to the body of the user.

An eighth aspect includes the features of the first aspect, further comprising the step of determining if the accessory is connected to the portable electronic device and basing the selection of at least one sound output unit also on this determination.

A ninth aspect includes the features of the first aspect, wherein the step of selecting sound output unit comprises selecting at least one sound output unit of the portable electronic device if the first sound output unit is not attached to the body of the user.

A tenth aspect includes the features of the ninth aspect, wherein the only sound output units selected if the first sound output unit is not attached to the body of the user are sound output units of the portable electronic device.

Another object is to provide a portable electronic device being capable of providing a more efficient way of determining where to output sound for an application of a portable electronic device in relation to a connected accessory.

According to an eleventh aspect this object is achieved by a portable electronic device to be connected to an accessory that comprises at least one first sound output unit and comprising:
an interface to be connected to the accessory,
an application handling unit configured to handle an application, and
   a control unit configured to,
   determine if the first sound output unit of the accessory is attached to the body of a user or not;
   select at least one sound output unit to be used for the application based on the determination of if the first sound output unit is attached to the body of the user or not; and
   use said selected sound output unit for outputting sound for the application.

A twelfth aspect includes the features of the eleventh aspect, wherein the control unit when being configured to select at least one sound output unit is configured to select at least one sound output unit of the accessory if the first sound output unit is attached to the body of the user.

A thirteenth aspect includes the features of the twelfth aspect, wherein the only sound output units selected if the first sound output unit is attached to the body of the user are sound output units of the accessory.

A fourteenth aspect includes the features of the eleventh aspect, wherein the application handling unit is configured to handle events occurring in the application and the control unit is further configured to detect the occurrence of events in the application in relation to the portable electronic device, to base the selection of sound output unit also on the detection of the occurence of the event and to, when using the selected sound output unit, alert the event using the selected sound output unit.

A fifteenth aspect includes the features of the fourteenth aspect, further comprising a vibrator and the control unit being further configured to select the vibrator for alerting the event if the first sound output unit is attached to the body of the user.

A sixteenth aspect includes the features of the fourteenth aspect, wherein the event is the reception of an incoming call.

A seventeenth aspect includes the features of the sixteenth aspect, wherein the control unit is further configured to automatically accept the call after a predetermined number of alerting intervals if the first sound output unit is attached to the body of the user.

An eighteenth aspect includes the features of the eleventh aspect, wherein the control unit is further configured to determine if the accessory is connected to the portable electronic device and base the selection of at least one sound output unit also on this determination.

A nineteenth aspect includes the features of the eleventh aspect, further comprising at least one sound output unit and where the control unit, when being configured to select at least one sound output unit, is configured to select at least one sound output unit of the portable electronic device if the first sound output unit is not attached to the body of the user.

A twentieth aspect includes the features of the nineteenth aspect, wherein the only sound output units selected if the first sound output unit is not attached to the body of the user are sound output units of the portable electronic device.

A twenty-first aspect includes the features of the eleventh aspect, wherein it is a portable communication device.

An twenty-second aspect includes the features of the twenty-first aspect, wherein it is a cellular phone.

A twenty-third aspect is directed towards a portable electronic device to be connected to an accessory that comprises at least one first sound output unit and comprising:
means for determining if the first sound output unit is attached to the body of a user or not,
means for selecting at least one sound output unit to be used for the application based on the determination of if the first sound output unit is attached to the body of the user or not, and
means for using said selected sound output unit for outputting sound for the application.

Another object is to provide a computer program product for more efficiently determining where to output sound for an application of a portable electronic device in relation to an accessory.

According to a twenty-fourth aspect, this object is achieved by a computer program product for determining where to output sound for an application of a portable electronic device in relation to an accessory that comprises at least one first sound output unit and comprising computer program code being configured to, when said code is loaded into the portable electronic device:
determine if the first sound output unit is attached to the body of a user or not,
select at least one sound output unit to be used for the application based on the determination of if the first sound output unit is attached to the body of the user or not, and
use said selected sound output unit for outputting sound for the application.

Another object is to provide a method that enables a more efficient determination of where to output sound for an application of a portable electronic device in relation to an accessory.

According to a twenty-fifth aspect, this object is achieved by a method of enabling determining where to output sound for an application of a portable electronic device in relation to an accessory that comprises at least one first sound output unit and being connected to the portable electronic device, the method comprising the steps of:
detecting that the first sound output unit is attached to the body of a user, and
providing a signal indicating the attachment, in order for the portable electronic device to be able to select at least one sound output unit to be used for the application based on the determination of if the first sound output unit is attached to the body of the user or not.

A twenty-sixth aspect includes the features of the twenty-fifth aspect, further comprising the step of receiving sound to be output for the application and outputting the sound via the first sound output unit.

Another object is to provide an accessory that enables a portable electronic device to provide a more efficient way of determining where to output sound for an application of this portable electronic device.

According to a twenty-seventh aspect, this object is achieved by an accessory for connection to a portable electronic device comprising:
an interface to be connected to the portable electronic device,
at least one first sound output unit, and
a detector for detecting that the first sound output unit is attached to the body of a user and provide a signal indicating the attachment, in order for the portable electronic device to be able to select at least one sound output unit to be used for the application based on the determination of if the first sound output unit is attached to the body of the user or not.

A twenty-eighth aspect includes the features of the twenty-seventh aspect, wherein it is a portable hands-free device.

The present invention has many advantages. It allows the guaranteeing that sound is only output to the accessory in case the user has the first sound output unit attached to his/her body and if not the sound output units of the portable electronic device may be used. This has the advantage of providing a more efficient selection of sound output units, of limiting the disturbance of the environment, if it is possible, as well as saving battery power, since only relevant sound output units are used.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a front view of a cellular phone,
fig. 2 schematically shows an accessory according to the present invention in the form of a hands-free device for connection to the phone of fig. 1,
fig. 3 schematically shows different elements of the hands-free device of fig. 2 connected to a system connector of the phone of fig. 1,
fig. 4 shows a block schematic of units in the phone of fig. 1 used for determining where to output sound for an application and for handling the application,
fig. 5 shows a flow chart of a method of determining where to output sound for an application in relation to the accessory and being performed in the phone of fig. 1, and
fig. 6 schematically shows a computer program product in the form of a CD ROM disc comprising computer program code for performing the present invention.

### DETAILED DESCRIPTION OF EMBODIMENTS

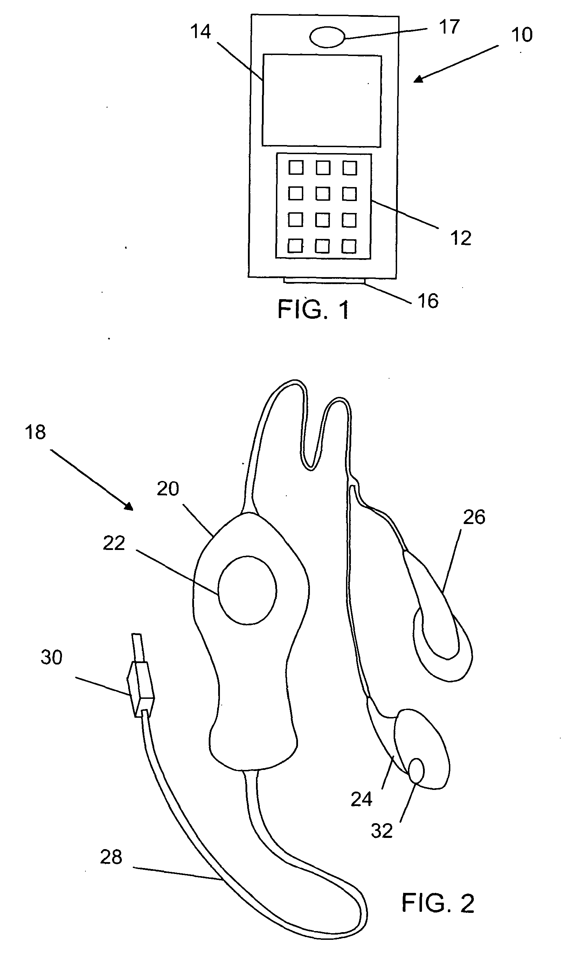

The present invention relates to an accessory for a portable electronic device, such as a portable communication device, for instance a cellular phone as well as to such a portable electronic device. Such a phone 10 is schematically shown in a front view in fig. 1. The phone 10 includes a display 14, which may be a liquid crystal display, a key pad 12 including a number of keys and an electrical interface in the form of a system connector 16 for connection to an accessory. There is furthermore a phone sound output unit in the form of a speaker 17. The phone normally includes an antenna as well. However nowadays this is normally provided in the interior of the phone 10. A cellular phone is just one example of a portable electronic device. It can also be such things as a lap top computer, a palm top computer, an electronic organizer, a smartphone, or a communicator.

Fig. 2 schematically shows an accessory according to the present invention. The accessory is here a portable hands-free device 18 which includes an electrical interface in the form of a plug 30 for insertion into the system connector of the phone and a cord 28 connected to a main body 20 including a microphone 22. The main body 20 is furthermore connected to a first and a second accessory sound output unit in the form of a first and a second earphone 24 and 26 via a further cord. The microphone 22 is to be connected to the system connector of the phone as are the earphones 24 and 26. The first earphone 24 also includes a pressure receiving unit 32 that is part of a detector arranged to detect that the earphone is attached to the body of the user and here attached to the ear. How this detector may be implemented will be described in more detail later.

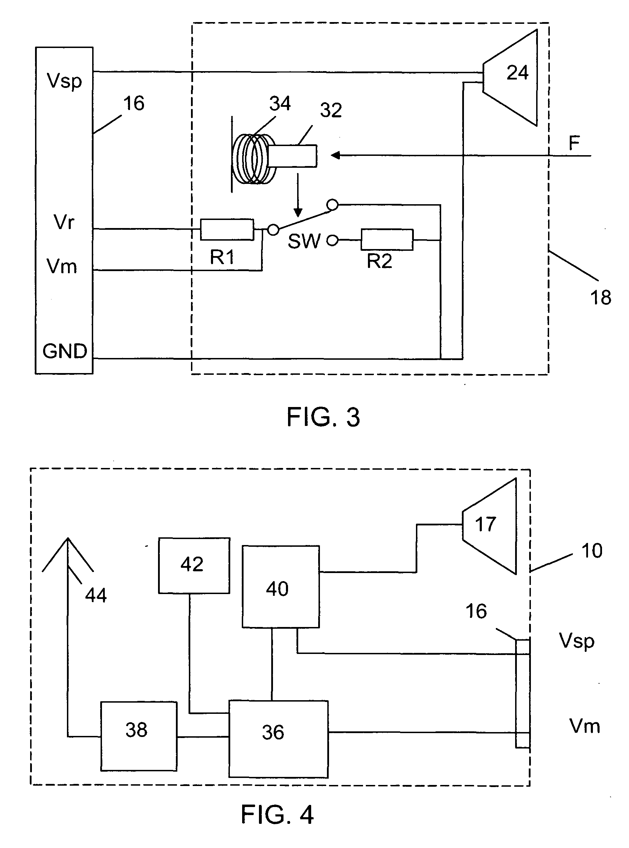

Fig. 3 schematically shows the different elements of the hands free device 18 connected to the system connector 16. The hands-free device 18 is here outlined in the form of a dashed box. For simplicity only the first earphone 24 is here shown being connected to the system connector 16 for receiving an electrical sound signal Vsp. It should be realised that the second earphone may receive the same or another sound signal, where another sound signal may be provided if stereo sound is desired. In the hands-free device 18 there is also shown the pressure receiving unit 32 which is mechanically connected to an interior surface of the hands-free device 18 via a spring 34. The pressure receiving unit 32 can be moved by a force F, which here is provided through the earphone 26 being attached to the ear of a user. This force F moves the pressure receiving unit 32, which may be in the form of a plastic or metallic pin, in the direction of the spring 34. This movement, makes the pressure receiving unit 32 mechanically influence a switch SW provided in the accessory 18 for changing its position. When force F is no longer applied the pressure receiving unit 32 retains its original position and also changes the position of the Switch SW back to its original position. The switch SW has one input connected to a reference voltage Vr provided by the system connector 16 via a first resistor R1 and two outputs, a first directly connect to a ground potential GND that is provided by the system connector 16 and a second connected to the same ground potential GND via a second resistor R2. A measured voltage Vm is provided to the system connector 16 from the connection point between input of the switch SW and the first resistor R1. When no force F is applied, the switch SW interconnects its input with the first output and thus provides a ground potential GND as a measured voltage Vm, while when force F is applied the pressure receiving unit 32 actuates the switch so that it interconnects its input with the second output and thus provides a measured voltage Vm that is a divided down voltage of the reference voltage Vr. By a suitable selection of resistors, this voltage is one that can be directly used in digital applications. In this way the spring 34, pressure receiving unit 32, switch SW and resistors R1 and R2 together make up an electro-merchanical detector that is arranged to detect that the earphone 26 is plugged into the ear of the user.

Fig. 4 shows a block schematic of different units in the phone that are relevant for the present invention. In the phone 10, which is generally shown as a dashed box, there is provided an application handling unit, which in the present example is a unit 38 implementing a call handling application handling incoming and outgoing telephone calls. This application handling unit also handles events occuring in the application. For this reason the application handling unit 38 is connected to an antenna 44. There is furthermore a control unit 36, which is connected to the system connector 16 for receiving the measured voltage Vm, to a driving unit 40 driving sound output units using the electrical sound signal Vsp and to a vibrator 42. The driving unit 40 is also connected to the phone speaker 17 as well as to the system interface 16 for providing the electrical sound signal Vsp. It should here be realised that the driving unit 40 may have access to a number of alerting signals. These alerting signals may be set by the user of the phone to alert calls. The user may for instance select one type of ring signal associated with a certain calling party, for instance according to a phone book setting. In the figure the ground GND and reference voltage Vr have been omitted for providing a more clear description of the present invention. These may furthermore be provided by other units of the phone, for instance in relation to the ordinary power supply circuits of the phone.

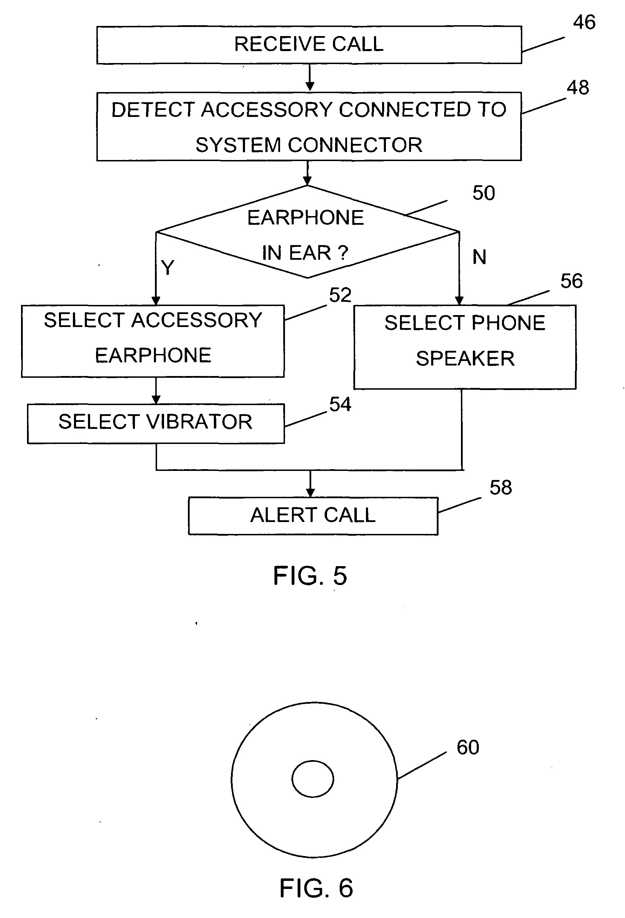

The functioning of the present invention will now be described with reference being made to the previously described fig. 1 - 4 as well as with reference being made to fig. 5, which shows a flow chart of a method of determining where to output sound for an application of and in this embodiment also determining where to alert an event occurring in the phone in relation to the accessory.

As an event occurs in the phone, for instance a phone call being received by the application handling unit 38, step 46, it notifies the control unit 36 of this fact. The control unit 36 then determines that the hands-free device 18 is connected to system connector 16 of the phone 10, step 48. This may be done through detecting that the plug 30 is inserted ino the connector 16. It should here be realised that a number of ways may be employed to detect this. It can for instance be done through detecting a microphone being connected (not shown), through detecting that the earphone is electrically connected to the interface 16 or through using the measured voltage Vm. There are thus countless ways in which this detection may be performed. If the hands-free device 18 is not connected, the control unit 36 uses the ordinary sound output units of the phone for alerting the call in a known way.

When the control unit 36 has determined that the hands-free device 18 is connected to the system connector 16 of the phone 10, it goes on and investigates if the first earphone 24 is attached to the ear, step 50. This is here done through investigating the measured voltage Vm. If it is zero the first earphone 24 is not attached, while if it has another value the first earphone 24 is attached. In case the first earphone is attached, step 50, the control unit 36 selects at least one sound output unit in the accessory 18 for alerting the call, step 52, and then the only sound output units selected are those provided in the accessory, i.e. no sound output unit of the phone. It also selects another alerting unit of the phone, namely the vibrator 42, step 54. Once this has been done alerting is performed, step 58, which is done through the control unit 36 ordering the driving unit 40 to provide the electrical sound signal Vsp to the earphones 24 and 26 via the system connector 16 and through activating the vibrator 42. The user is then free to accept the call in a known way.

If the control unit 36 has determined that the first earphone 24 is not attached to the ear, step 50, it selects at least one sound output unit in the phone for alerting the call, step 56, and then the only sound output units selected are those provided in the phone, i.e. no sound output unit of the accessory and thereafter orders the driving unit 40 to alert the call, step 58, using the phone speaker 17, whereupon the user is free to accept the call.

According to the present invention, it is in this way made sure that the fact that the first sound output unit of the accessory is connected to the body of the user is considered when selecting ways to alert an event. In this way it is guaranteed that sound is only output to the hands-free device in case the user has the earphone attached to his/her body and if not the sound output units of the phone are used. This has the advantage of providing a more efficient selection of sound output units, of limiting the disturbance of the environment, whenever it is possible, as well as saving battery power, since only relevant sound output units are used. It should also be realised that in case the accessory is used for other applications, these will not be influenced by the selection of sound output unit according to the present invention unless they use sound.

The control unit is preferably provided in the form of a microprocessor with corresponding program code for performing the method steps. The application handling unit and driving unit are also normally provided in this way. The program code can furthermore be provided on a data carrier such as a CD ROM 60 as shown in fig. 6 or a memory stick which performs the method when being loaded into the phone. The program code may as an alternative be provided on a server, from where it is downloaded to the portable electronic device. It is here possible to connect the interface directly to a computer, for instance a PC, and download the software into the phone from that computer.

The present invention can be varied in a number of ways in addition to those that have already been mentioned. It is possible that when a call is being alerted after a determination has been made that the first sound output unit of the accessory is attached to the body of the user, that the call is automatically accepted by the phone after a predetermined number of alerting intervals. This makes the process of receiving the call easier for the user, while still enabling him/her to decline the call, for instance by providing a busy tone.

Naturally it is possible to provide a detector also for the second earphone shown in fig. 2. This can then be used for selecting only the sound output units that are attached to the body for output of sound. A user may for instance have only one connected to his ear, and then only that may be used. This enables a further saving of power. This feature can also be used for determining if mono or stereo sound is to be used in alerting. It is furthermore possible to completely omit detection of if the accessory is connected to the electrical interface of the phone and only use the detection of if the earphone is connected to the body of the user.

Another variation is that it is of course not necessary to use the vibrator for alerting the call after a determination has been made that the sound output unit of the accessory is attached to the body of the user. As another variation it is possible that only the vibrator is used for alerting when the first earphone is not attached to the ear, while no sound output unit of the accessory is selected.

As mentioned above the alerting is not restricted to alerting calls, but can for instance be applied for alerting of received messages, such as SMS-, MMS- or e-mail messages as well as in relation to settings made in a calendar. For this reason it should be realised that the application handling unit may also be a message handling unit or a calendar handling unit. In fact the present invention is not limited to application handling units where events occur at all, but may be any application that uses sound, such as a music player application, digital television application or video player application.

Also the detector can be varied in many ways. In the case of the electro-mechanical detector it should be realised that all types of voltage levels may be detected. The resistors may be connected in another way in relation to the switch so that a divided down voltage level together with the feeding voltage may be used for detecting if the first earphone is attached to the ear or not. There could also be a switching between the feeding voltage and ground. The invention is in fact not at all limited to electro-mechanical detectors. It may for instance be a light detector, that detects the light conditions when the accessory is attached to the body of the user, for instance if it is dark through the detector being pressed to the ear. It can also be an IR detector detecting the heat of the body, a pulse detector detecting the pulse of the user, a detector detecting the capacitance of the user or even a biometrics detector.

The interfaces between the phone and the accessory need not be electrical. They can just as well be in the form of short range wireless communication units, for instance Bluetooth^{™} communication units. The connection of the accessory is then detected through the different communication units communicating with each other. The signal from the detector will then also be transmitted in this communication.

In view of the different variations mentioned above, the present invention is therefore only to be limited by the following claims.

## Claims

1. A method of determining where to output sound for an application (38) of a portable electronic device (10) in relation to at least one sound output unit of the portable electronic device (10) and an accessory (18) that comprises a first sound output unit (24) and a second sound output unit (26), the accessory (18) being connected to the portable electronic device (10), the method being **characterized by**:
*determining* (50) if the first sound output unit (24) is attached to the ear of a user or not; and if the second sound output unit (26) is attached to the ear of a user or not;
*selecting* (52, 56) at least one sound output unit (24, 26; 17) to be used for the application based on the determination of if the first sound output unit (24) is attached to the ear of the user or not, and based on the determination of if the second sound output unit (26) is attached to the ear of the user or not, such that the sound output units (24, 26) of the accessory (18) that are attached to the ear of the user are selected and if the first sound output unit (24) and the second sound output unit (26) are not attached to the ears of the user, the at least one sound output unit of the portable electronic device is selected; and
using (58) said selected sound output unit for outputting sound for the application.

2. The method according to claim 1, further comprising the step of *detecting* (46) the occurrence of an event in the application in relation to the portable electronic device, wherein the step of selecting sound output unit is also based on the detection of the occurrence of the event, and the step of using (58) said selected sound output unit comprises alerting (58) the event using said selected sound output unit, the event comprising at least one of alerting a call, alerting of received messages, or being in relation to settings made in a calendar.

3. The method according to any of the claims 1 or 2, wherein the step of determining (50) is performed by:
*detecting* (32, 34, SW, R1, R2) that the first sound output unit (24) or the second sound output unit (26) is attached to the ear of a user or that the first output unit (24) and the second output unit (26) are attached to the ears of a user; and
*providing* a signal (Vm) indicating the attachment, in order for the portable electronic device to be able to select at least one sound output unit (24, 26; 17) to be used for the application based on the determination of if the first sound output unit (24) or the second sound output unit (26) is attached to the ear of the user or not or based on the determination of if the first sound output unit (24) and the second sound output unit (26) are attached to the ears of the user or not.

4. The method according to any of the claims 2 - 3, further comprising the step of selecting a vibrator in the portable electronic device for alerting the event if the first sound output unit (24) or the second sound output unit (26) is attached to the ear of the user or if the first sound output unit (24) and the second sound output unit (26) are attached to the ears of the user.

5. The method according to any of the claims 2 - 3, wherein the step of determining the occurrence of an event comprises receiving an incoming call and wherein the method further comprises the step of automatically accepting the call after a predetermined number of alerting intervals if the first sound output unit (24) or the second sound output unit (26) is attached to the ear of the user or if the first sound output unit (24) and the second sound output unit (26) are attached to the ears of the user.

6. The method according to claim 1, further comprising the step of determining if the accessory is connected to the portable electronic device and basing the selection of at least one sound output unit also on this determination.

7. A portable electronic device (10) comprising at least one sound output unit and being arranged to be connected to an accessory (18), the accessory (18) comprising a first sound output unit (24) and a second sound output unit (26), the portable electronic device (10) comprising:
an interface (16) to be connected to the accessory (18) and an application handling unit (38) configured to handle an application, the portable electronic device (10) being **characterized by**
a control unit (36) configured to;
determine if the first sound output unit (24) of the accessory is attached to the ear of a user or not; and determine if the second sound output unit (26) of the accessory is attached to the ear of a user or not;
select at least one sound output unit (24, 26; 17) to be used for the application based on the determination of if the first sound output unit (24) and if the second sound output unit (26) is attached to the ear of the user or not, such that the sound output units (24, 26) of the accessory which are attached to the ears of the user are selected and if the first sound output unit (24) and the second sound output unit (26) are not attached to the ears of the user, the at least one sound output unit of the portable electronic device is selected; and
use said selected sound output unit for outputting sound for the application.

8. The portable electronic device of claim 7, further comprising a vibrator (42) and the control unit being further configured to select the vibrator for alerting an event if the first sound output unit (24) or the second sound output unit (26) is attached to the ear of the user or if the first sound output unit (24) and the second sound output unit (26) are attached to the ears of the user, the event comprising at least one of alerting a call, alerting of received messages, or being in relation to settings made in a calendar.

9. The portable electronic device according to any of the claims 7 - 8, wherein an event is the reception of an incoming call and wherein the control unit is further configured to automatically accept the call after a predetermined number of alerting intervals if the first sound output unit (24) or the second sound output unit (26) is attached to the ear of the user or if the first sound output unit (24) and the second sound output unit (26) are attached to the ears of the user.

10. A computer program product for determining where to output sound for an application of a portable electronic device in relation to at least one sound output unit of the portable electronic device (10) and an accessory that comprises a first sound output unit (24) and/or the second sound output unit (26), the computer program product being **characterized by**:
determine if the first sound output unit (24) is attached to the ear of a user or not and if the second sound output unit (26) is attached to the ear of a user or not;
select at least one sound output unit (24, 26; 17) to be used for the application based on the determination of if the first sound output unit (24) is attached to the ear of the user or not, and based on the determination of if the second sound output unit (26) is attached to the ear of the user or
not, such that the sound output units (24, 26) of the accessory (18) that are attached to the ear of the user are selected and if the first sound output unit (24) and the second sound output unit (26) are not attached to the ears of the user, the at least one sound output unit of the portable electronic device is selected; and
use said selected sound output unit for outputting sound for the application.

## Patentansprüche

1. Verfahren zum Bestimmen, wo ein Ton für eine Anwendung (38) einer tragbaren elektronischen Vorrichtung (10) in Bezug auf mindestens eine Tonausgabeeinheit der tragbaren elektronischen Vorrichtung (10) und ein Zubehörteil (18), welches eine erste Tonausgabeeinheit (24) und eine zweite Tonausgabeeinheit (26) umfasst, auszugeben ist, wobei das Zubehörteil (18) mit der tragbaren elektronischen Vorrichtung (10) verbunden ist, wobei das Verfahren **gekennzeichnet ist durch**:
Bestimmen (50), ob die erste Tonausgabeeinheit (24) an dem Ohr eines Benutzers angebracht ist oder nicht; und ob die zweite Tonausgabeeinheit (26) an dem Ohr eines Benutzers angebracht ist oder nicht;
Auswählen (52, 56) von mindestens einer Tonausgabeeinheit (24, 26; 17), welche für die Anwendung zu verwenden ist, auf der Grundlage der Bestimmung, ob die erste Tonausgabeeinheit (24) an dem Ohr des Benutzers angebracht ist oder nicht, und auf der Grundlage der Bestimmung, ob die zweite Tonausgabeeinheit (26) an dem Ohr des Benutzers angebracht ist oder nicht, sodass die Tonausgabeeinheiten (24, 26) des Zubehörteils (18), welche an dem Ohr des Benutzers angebracht sind, ausgewählt werden, und wenn die erste Tonausgabeeinheit (24) und die zweite Tonausgabeeinheit (26) nicht an den Ohren des Benutzers angebracht sind, die mindestens eine Tonausgabeeinheit der tragbaren elektronischen Vorrichtung ausgewählt wird; und
Verwenden (58) der ausgewählten Tonausgabeeinheit zum Ausgeben des Tons für die Anwendung.

2. Verfahren nach Anspruch 1, ferner umfassend den Schritt Erfassen (46) des Auftretens eines Ereignisses in der Anwendung in Bezug auf die tragbare elektronische Vorrichtung, wobei der Schritt des Auswählens der Tonausgabeeinheit ferner auf der Erfassung des Auftretens des Ereignisses basiert, und wobei der Schritt des Verwendens (58) der ausgewählten Tonausgabeeinheit ein Alarmieren (58) des Ereignisses unter Verwendung der ausgewählten Tonausgabeeinheit umfasst, wobei das Ereignis mindestens eines von einem Alarmieren eines Anrufs, einem Alarmieren von empfangenen Nachrichten oder, dass es in Verbindung zu in einem Kalender gemachten Einstellungen steht, umfasst.

3. Verfahren nach einem der Ansprüche 1 oder 2, wobei der Schritt des Bestimmens (50) durchgeführt wird durch:
Erfassen (32, 34, SW, R1, R2), dass die erste Tonausgabeeinheit (24) oder die zweite Tonausgabeeinheit (26) an dem Ohr eines Benutzers angebracht ist oder dass die erste Ausgabeeinheit (24) und die zweite Ausgabeeinheit (26) an den Ohren eines Benutzers angebracht sind; und
Bereitstellen eines Signals (Vm), welches die Anbringung anzeigt, um der tragbaren elektronischen Vorrichtung zu ermöglichen, mindestens eine der Tonausgabeeinheiten (24, 26; 17), welche für die Anwendung zu verwenden sind, auf der Grundlage der Bestimmung, ob die erste Tonausgabeeinheit (24) oder die zweite Tonausgabeeinheit (26) an dem Ohr des Benutzers angebracht ist oder nicht, oder auf der Grundlage der Bestimmung, ob die erste Tonausgabeeinheit (24) und die zweite Tonausgabeeinheit (26) an den Ohren des Benutzers angebracht sind oder nicht, auszuwählen.

4. Verfahren nach einem der Ansprüche 2-3, ferner umfassend den Schritt eines Auswählens eines Vibrators in der tragbaren elektronischen Vorrichtung zum Alarmieren des Ereignisses, wenn die erste Tonausgabeeinheit (24) oder die zweite Tonausgabeeinheit (26) an dem Ohr des Benutzers angebracht ist oder wenn die erste Tonausgabeeinheit (24) und die zweite Tonausgabeeinheit (26) an den Ohren des Benutzers angebracht sind.

5. Verfahren nach einem der Ansprüche 2-3, wobei der Schritt des Bestimmens des Auftretens eines Ereignisses ein Empfangen eines eingehenden Anrufs umfasst, und wobei das Verfahren ferner den Schritt eines automatischen Annehmens des Anrufs nach einer vorbestimmten Anzahl von Alarmierungsintervallen umfasst, wenn die erste Tonausgabeeinheit (24) oder die zweite Tonausgabeeinheit (26) an dem Ohr des Benutzers angebracht ist oder wenn die erste Tonausgabeeinheit (24) und die zweite Tonausgabeeinheit (26) an den Ohren des Benutzers angebracht sind.

6. Verfahren nach Anspruch 1, ferner umfassend den Schritt des Bestimmens, ob das Zubehörteil mit der tragbaren elektronischen Vorrichtung verbunden ist, und Stützen der Auswahl der mindestens einen Tonausgabeeinheit ferner auf dieser Bestimmung.

7. Tragbare elektronische Vorrichtung (10), umfassend mindestens eine Tonausgabeeinheit und ausgestaltet, um mit einem Zubehörteil (18) verbunden zu werden, wobei das Zubehörteil (18) eine erste Tonausgabeeinheit (24) und eine zweite Tonausgabeeinheit (26) umfasst, wobei die tragbare elektronische Vorrichtung (10) umfasst:
eine Schnittstelle (16), welche mit dem Zubehörteil (18) zu verbinden ist, und eine Anwendungshandhabungseinheit (38),
welche ausgestaltet ist, eine Anwendung handzuhaben, wobei die tragbare elektronische Vorrichtung (10) **gekennzeichnet ist durch**
eine Steuereinheit (36), welche ausgestaltet ist,
zu bestimmen, ob die erste Tonausgabeeinheit (24) des Zubehörteils an dem Ohr eines Benutzers angebracht ist oder nicht; und zu bestimmen, ob die zweite Tonausgabeeinheit (26) des Zubehörteils an dem Ohr eines Benutzers angebracht ist oder nicht;
mindestens eine Tonausgabeeinheit (24, 26; 17), welche für die Anwendung zu verwenden ist, auf der Grundlage der Bestimmung, ob die erste Tonausgabeeinheit (24) und ob die zweite Tonausgabeeinheit (26) an dem Ohr des Benutzers angebracht ist oder nicht, auszuwählen, sodass die Tonausgabeeinheiten (24, 26) des Zubehörteils, welche an den Ohren des Benutzers angebracht sind, ausgewählt werden, und, wenn die erste Tonausgabeeinheit (24) und die zweite Tonausgabeeinheit (26) nicht an den Ohren des Benutzers angebracht sind, die mindestens eine Tonausgabeeinheit der tragbaren elektronischen Vorrichtung ausgewählt wird; und
die ausgewählte Tonausgabeeinheit zum Ausgeben von Ton für die Anwendung zu verwenden.

8. Tragbare elektronische Vorrichtung nach Anspruch 7, ferner umfassend einen Vibrator (42) und wobei die Steuereinheit ferner ausgestaltet ist, den Vibrator zum Alarmieren eines Ereignisses auszuwählen, wenn die erste Tonausgabeeinheit (24) oder die zweite Tonausgabeeinheit (26) an dem Ohr des Benutzers angebracht ist, oder wenn die erste Tonausgabeeinheit (24) und die zweite Tonausgabeeinheit (26) an den Ohren des Benutzers angebracht sind, wobei das Ereignis mindestens eines von einem Alarmieren eines Anrufs, einem Alarmieren von empfangenen Nachrichten oder, dass es in Beziehung zu in einem Kalender gemachten Einstellung steht, umfasst.

9. Tragbare elektronische Vorrichtung nach einem der Ansprüche 7-8, wobei ein Ereignis der Empfang eines ankommenden Anrufs ist, und wobei die Steuereinheit ferner ausgestaltet ist, den Anruf nach einer vorbestimmten Anzahl von alarmierenden Intervallen automatisch anzunehmen, wenn die erste Tanausgabeeinheit (24) oder die zweite Tonausgabeeinheit (26) an dem Ohr des Benutzers angebracht ist oder wenn die erste Tonausgabeeinheit (24) und die zweite Tonausgabeeinheit (26) an den Ohren des Benutzers angebracht sind.

10. Computerprogrammprodukt zum Bestimmen, wo ein Ton für eine Anwendung einer tragbaren elektronischen Vorrichtung in Bezug auf mindestens eine Tonausgabeeinheit der tragbaren elektronischen Vorrichtung (10) und ein Zubehörteil, welches eine erste Tonausgabeeinheit (24) und/oder die zweite Tonausgabeeinheit (26) umfasst, auszugeben ist, wobei das Computerprogrammprodukt **gekennzeichnet ist durch**:
Bestimmen (50), ob die erste Tonausgabeeinheit (24) an dem Ohr eines Benutzers angebracht ist oder nicht, und
ob die zweite Tonausgabeeinheit (26) an dem Ohr des Benutzers angebracht ist oder nicht;
Auswählen von mindestens einer Tonausgabeeinheit (24, 26; 17), welche für die Anwendung zu verwenden ist, auf der Grundlage der Bestimmung, ob die erste Tonausgabeeinheit (24) an dem Ohr des Benutzers angebracht ist oder nicht, und auf der Grundlage der Bestimmung, ob die zweite Tonausgabeeinheit (26) an dem Ohr des Benutzers angebracht ist oder nicht, sodass die Tonausgabeeinheiten (24, 26) des Zubehörteils (18), welche an dem Ohr des Benutzers angebracht sind, ausgewählt werden, und, wenn die erste Tonausgabeeinheit (24) und die zweite Tonausgabeeinheit (26) nicht an den Ohren des Benutzers angebracht sind, die mindestens eine Tonausgabeeinheit der tragbaren elektronischen Vorrichtung ausgewählt wird; und
Verwenden der ausgewählten Tonausgabeeinheit zum Ausgeben des Tons für die Anwendung.

## Revendications

1. Procédé permettant de déterminer où délivrer en sortie un son pour une application (38) d'un dispositif électronique portable (10) en relation avec au moins une unité de sortie de son du dispositif électronique portable (10) et un accessoire (18) qui comprend une première unité de sortie de son (24) et une deuxième unité de sortie de son (26), l'accessoire (18) étant relié au dispositif électronique portable (10), le procédé étant **caractérisé par** le fait :
de déterminer (50) si la première unité de sortie de son (24) est couplée à l'oreille d'un utilisateur ou non ; et si la deuxième unité de sortie de son (26) est couplée à l'oreille d'un utilisateur ou non ;
de sélectionner (52, 56) au moins une unité de sortie de son (24, 26 ; 17) à utiliser pour l'application selon que la première unité de sortie de son (24) est couplée à l'oreille de l'utilisateur ou non, et selon que la deuxième unité de sortie de son (26) est couplée à l'oreille de l'utilisateur ou non, de sorte que les unités de sortie de son (24, 26) de l'accessoire (18) qui sont couplées aux oreilles de l'utilisateur soient sélectionnées et, si la première unité de sortie de son (24) et la deuxième unité de sortie de son (26) ne sont pas couplées aux oreilles de l'utilisateur, l'au moins une unité de sortie de son du dispositif électronique portable soit sélectionnée ; et
d'utiliser (58) ladite unité de sortie de son sélectionnée pour délivrer en sortie un son pour l'application.

2. Procédé selon la revendication 1, comprenant en outre l'étape qui consiste à détecter (46) l'occurrence d'un événement dans l'application en relation avec le dispositif électronique portable, dans lequel l'étape de sélection de l'unité de sortie de son se base également sur la détection de l'occurrence de l'événement, et l'étape d'utilisation (58) de ladite unité de sortie de son sélectionnée comprend l'alerte (58) de l'événement en utilisant ladite unité de sortie de son sélectionnée, l'événement comprenant au moins l'une d'une alerte d'un appel, l'alerte de messages reçus, ou étant en relation avec des réglages effectués dans un calendrier.

3. Procédé selon la revendication 1 ou 2, dans lequel l'étape de détermination (50) est exécutée :
en détectant (32, 34, SW, R1, R2) que la première unité de sortie de son (24) ou la deuxième unité de sortie de son (26) est couplée à l'oreille d'un utilisateur ou que la première unité de sortie (24) et la deuxième unité de sortie (26) sont couplées aux oreilles d'un utilisateur ; et
en fournissant un signal (Vm) indiquant le couplage, pour que le dispositif portable électronique soit capable de sélectionner au moins une unité de sortie de son (24, 26 ; 17) à utiliser pour l'application selon que la première unité de sortie de son (24) ou la deuxième unité de sortie de son (26) est couplée à l'oreille de l'utilisateur ou non ou selon que la première unité de sortie de son (24) et la deuxième unité de sortie de son (26) sont couplées aux oreilles de l'utilisateur ou non.

4. Procédé selon l'une des revendications 2 et 3, comprenant en outre l'étape qui consiste à sélectionner un vibreur dans le dispositif électronique portable pour alerter de l'événement si la première unité de sortie de son (24) ou la deuxième unité de sortie de son (26) est couplée à l'oreille de l'utilisateur ou si la première unité de sortie de son (24) et la deuxième unité de sortie de son (26) sont couplées aux oreilles de l'utilisateur.

5. Procédé selon l'une des revendications 2 et 3, dans lequel l'étape de détermination de l'occurrence d'un événement comprend la réception d'un appel entrant, et le procédé comprenant en outre l'étape qui consiste à accepter automatiquement l'appel après un nombre prédéterminé d'intervalles d'alerte si la première unité de sortie de son (24) ou la deuxième unité de sortie de son (26) est couplée à l'oreille de l'utilisateur ou si la première unité de sortie de son (24) et la deuxième unité de sortie de son (26) sont couplées aux oreilles de l'utilisateur.

6. Procédé selon la revendication 1, comprenant en outre l'étape qui consiste à déterminer si l'accessoire est relié au dispositif électronique portable et à baser également la sélection d'au moins une unité de sortie de son sur cette détermination.

7. Dispositif électronique portable (10) comprenant au moins une unité de sortie de son et est adapté pour être relié à un accessoire (18), l'accessoire (18) comprenant une première unité de sortie de son (24) et une deuxième unité de sortie de son (26), le dispositif électronique portable (10) comprenant :
une interface (16) devant être reliée à l'accessoire (18) et une unité de gestion d'application (38) configurée pour gérer une application, le dispositif électronique portable (10) étant **caractérisé par** :
une unité de commande (36) configurée :
pour déterminer si la première unité de sortie de son (24) de l'accessoire est couplée à l'oreille d'un utilisateur ou non ; et pour déterminer si la deuxième unité de sortie de son (26) de l'accessoire est couplée à l'oreille d'un utilisateur ou non ;
pour sélectionner au moins une unité de sortie de son (24, 26 ; 17) à utiliser pour l'application selon que la première unité de sortie de son (24) est couplée à l'oreille de l'utilisateur ou non, et selon que la deuxième unité de sortie de son (26) est couplée à l'oreille de l'utilisateur ou non, de sorte que les unités de sortie de son (24, 26) de l'accessoire qui sont couplées aux oreilles de l'utilisateur soient sélectionnées et, si la première unité de sortie de son (24) et la deuxième unité de sortie de son (26) ne sont pas couplées aux oreilles de l'utilisateur, l'au moins une unité de sortie de son du dispositif électronique portable soit sélectionnée ; et
pour utiliser ladite unité de sortie de son sélectionnée pour délivrer en sortie un son pour l'application.

8. Dispositif électronique portable de la revendication 7, comprenant en outre un vibreur (42) et l'unité de commande étant en outre configurée pour sélectionner le vibreur pour alerter d'un événement si la première unité de sortie de son (24) ou la deuxième unité de sortie de son (26) est couplée à l'oreille de l'utilisateur ou si la première unité de sortie de son (24) et la deuxième unité de sortie de son (26) sont couplées aux oreilles de l'utilisateur, l'événement comprenant au moins l'une d'une alerte d'un appel, d'une alerte de messages reçus, ou étant en relation avec les réglages effectués dans un calendrier.

9. Dispositif électronique portable selon l'une des revendications 7 et 8, dans lequel un événement est la réception d'un appel entrant, et dans lequel l'unité de commande est en outre configurée pour accepter automatiquement l'appel après un nombre prédéterminé d'intervalles d'alerte si la première unité de sortie de son (24) ou la deuxième unité de sortie de son (26) est couplée à l'oreille de l'utilisateur ou si la première unité de sortie de son (24) et la deuxième unité de sortie de son (26) sont couplées aux oreilles de l'utilisateur.

10. Produit de programme informatique permettant de déterminer où délivrer en sortie un son pour une application d'un dispositif électronique portable en relation avec au moins une unité de sortie de son du dispositif électronique portable (10) et un accessoire qui comprend une première unité de sortie de son (24) et/ou la deuxième unité de sortie de son (26), le produit de programme informatique étant **caractérisé par** le fait :
de déterminer si la première unité de sortie de son (24) est couplée à l'oreille d'un utilisateur ou non et si la deuxième unité de sortie de son (26) est couplée à l'oreille d'un utilisateur ou non ;
de sélectionner au moins une unité de sortie de son (24, 26 ; 17) à utiliser pour l'application selon que la première unité de sortie de son (24) est couplée à l'oreille de l'utilisateur ou non, et selon que la deuxième unité de sortie de son (26) est couplée à l'oreille de l'utilisateur ou non, de sorte que les unités de sortie de son (24, 26) de l'accessoire (18) qui sont couplées aux oreilles de l'utilisateur soient sélectionnées et, si la première unité de sortie de son (24) et la deuxième unité de sortie de son (26) ne sont pas couplées aux oreilles de l'utilisateur, l'au moins une unité de sortie de son du dispositif électronique portable soit sélectionnée ; et
d'utiliser ladite unité de sortie de son sélectionnée pour délivrer en sortie un son pour l'application.
